# NEUE EUROPÄISCHE PATENTSCHRIFT

(11) **EP 1 565 676 B2**
(45) Veröffentlichungstag und Bekanntmachung des Hinweises auf die Entscheidung über den Einspruch: **17.06.2009**
(45) Hinweis auf die Patenterteilung: 24.05.2006
(21) Anmeldenummer: 03788777.5
(22) Anmeldetag: 06.11.2003
(51) Int. Cl.: F16H 61/42, F16H 61/44, B60K 17/10

(54) **HYDROSTATISCHER MEHRMOTORENANTRIEB**
HYDROSTATIC MULTI-MOTOR DRIVE
SYSTEME D'ENTRAINEMENT MULTIMOTEUR HYDROSTATIQUE

(30) Priorität: 26.11.2002 DE 10255048
(43) Veröffentlichungstag der Anmeldung: 24.08.2005
(73) Patentinhaber: CNH Baumaschinen GmbH, 13581 Berlin (DE)
(72) Erfinder: IVANTYSYNOVA, Monika, 23843 Bad Oldesloe (DE); WEBER, Jürgen, 01139 Dresden (DE)
(74) Vertreter: Meinke, Dabringhaus und Partner GbR
(86) Internationale Anmeldenummer: PCT/DE2003/003682
(87) Internationale Veröffentlichungsnummer: WO 2004/048820

(56) Entgegenhaltungen:
- EP-A- 0 482 524
- DE-A- 4 203 877
- DE-A- 19 735 287
- DE-A1- 10 060 679
- DE-A1- 10 101 748
- GB-A- 2 257 496
- JP-A- 2001- 200 907
- US-A- 5 518 461
- US-A- 6 059 534

## Beschreibung

Die Erfindung betrifft einen hydrostatischen Mehrmotorenantrieb mit wenigstens zwei eine gemeinsame Last beaufschlagenden hydraulischen Motoren.

Hydraulische Antriebe mit zwei Motoren sind im wesentlichen in zwei unterschiedlichen Ausführungen bekannt.

In einer ersten Bauform sind die beiden Antriebe fest durch eine Welle miteinander verbunden und laufen damit beide permanent. In Anordnungen, bei denen mindestens einer der Motoren verstellbar ausgebildet ist und dieser Motor zum Erreichen von hohen Geschwindigkeiten durch Verstellung seines Verdrängervolumens bis auf Null verstellt wird, ist es nachteilig, dass der auf Null gestellte Motor mitgeschleppt wird und hierdurch hohe mechanische Verluste entstehen. Zur Vermeidung solcher Probleme sind außerdem Zweimotorenantriebe bekannt, bei denen die beiden Motoren durch Getriebe und Kupplungen miteinander verbunden sind, so dass in den Betriebsbereichen, bei denen der verstellbare Motor auf Null gestellt ist, dieser mechanisch vom zweiten Motor entkoppelt werden kann. Nachteilig bei dieser Lösung ist insbesondere die hohe Komplexität der Kupplung- und Getriebeanordnung, die nötig ist, um die Synchronisation der beiden Maschinen beim Ein- und Auskuppeln zu gewährleisten, so dass ein gleitender Übergang zwischen den verschiedenen Betriebsbereichen ermög; licht wird. EP-A0482524 zeigt einen Antrieb mit den Merkmalen des Oberbegriffs des Anspruchs 1.

Aus der DE 100 60 679 A1 ist ein weiterer hydrostatischer Zweimotorenantrieb bekannt, dessen beide Motoren mit wenigstens einer Kupplung verbunden sind. Auch ein solcher Antrieb weist die vorbeschriebenen Nachteile auf.

Der Erfindung liegt somit die Aufgabe zugrunde, diese Nachteile zu vermeiden und einen Mehrmotorenantrieb zu schaffen, der einen weiten Betriebsbereich durch die Verwendung mehrerer Motoren abdeckt und dabei eine möglichst einfache und unproblematische Kopplung der Motoren gewährleistet. Außerdem soll ein Verfahren zur Steuerung des Antriebes angegeben werden, das kontinuierliche Übergänge zwischen den unterschiedlichen Betriebsbereichen erlaubt.

Die Erfindung erreicht dies durch, die kennzeichnende Merkmale der Ansprüche 1 und 6.

Die Verwendung mehrerer Motoren bietet den Vorteil, dass kleinere Motoren einsetzbar sind und trotzdem im gemeinsamen Betrieb ein hohes Moment erzeugbar ist. Zusätzlich ermöglichen sie aber durch ihre kleine Bauweise eine hohe Drehzahl, was beispielsweise zur Schnellfahrt von mobilen Arbeitsmaschinen sinnvoll ist. Durch die Verwendung eines Freilaufes ist es möglich, dass alle Motoren gemeinsam in Sperrrichtung des Freilaufes zur Erzeugung eines hohen Abtriebsmomentes betrieben werden können. In Bereichen der Schnellfahrt werden dann die hinter den jeweiligen Freiläufen angeordneten Motoren bei auf Null gestelltem Verdrängungsvolumen durch den Freilauf von dem vor dem Freilauf angeordneten Motor entkoppelt, der dadurch den gesamten Volumenstrom der Pumpe(n) zur Erreichung einer hohen Geschwindigkeit zur Verfügung gestellt bekommt. So lassen sich bei großem Motorverdrängungsvolumen ein hohes Moment bei geringer Drehzahl erzeugen und umgekehrt bei gleichbleibender Druckmittelversorgung die Drehzahl erhöhen, wenn das Motorverdrängungsvolumen verkleinert wird. Bei der Reduktion des Motorverdrängungsvolumens auf Null stehen die hinter dem Freilauf angeordneten Motoren und sind dann, solange bis ihr Verdrängungsvolumen auf Null gestellt bleibt, an der Antriebsleistung nicht mehr beteiligt.

Probleme bei der Synchronisation treten nicht auf, da, sobald das Verdrängungsvolumen der hinter dem Freilauf angeordneten Motoren wieder vergrößert wird, deren Drehzahl steigt, bis der Freilauf sperrt und das durch die vorher entkoppelten Motoren erzeugte Moment über den Freilauf auf die Antriebsachse übertragen wird, d.h. die Drehmomente aller Motoren additiv zum Antrieb der Last genutzt werden.

Wird ein gemeinsamer Druckmittelkreislauf für alle Motoren verwandt, stellt sich automatisch ein Kräftegleichgewicht im gesamten System ein und ein sanftes Anfahren bzw. Abbremsen des durch den Freilauf entkoppelten Motors wird ohne zusätzliche regelungstechnische Einrichtungen erreicht.

Bei Verwendung von derartigen Motoren lassen sich die Vorteile des Freilaufes besonders günstig ausnutzen, da im niedertourigen Bereich mit hohen Drehmomenten die Motoren durch den Freilauf mechanisch gekoppelt sind. Durch Reduzierung des Motorvolumens steigt die Drehzahl, bis das Volumen eines der Motoren auf Null reduziert wird, so dass lediglich die verbleibenden, nun durch den Freilauf entkoppelten Motoren, zum Antrieb dienen. Ausgestaltungen der Erfindung ergeben sich aus den Unteransprüchen. So kann der Drucksensor in der/den Leitung/en zwischen Pumpe und Motor zur Unterscheidung des Betriebszustandes beschleunigen oder verzögern.

Der erfindungsgemäße Mehrmotorenantrieb hat zur Druckmittelversorgung der Motoren eine verstellbare Pumpe. Die Verwendung einer verstellbaren Pumpe hat im Vergleich zur Konstantpumpe mit Regelventil eine Reihe von Vorteilen. So lassen sich einfach kontinuierlich steuerbare Druckmittelflüsse erreichen, die zur Steuerung des Antriebes benutzt werden können. Die steuerbare Druckmittelversorgung bietet in Verbindung mit der Motorregelung Möglichkeiten, die Motorleistung in weiten Bereichen zu variieren und kontinuierliche Leistungsübergänge zu ermöglichen. Durch den Verzicht auf Regelventile im Leistungszweig ist das Antriebssystem außerdem durch die Vermeidung von Energieverlusten in den Ventilanordnungen sehr energiesparend.

In einer weiteren Ausgestaltung der Erfindung ist vorgesehen, dass die Motoren parallel zum Freilauf durch eine schaltbare Kupplung verbunden sind. Die parallele schaltbare Kupplung ermöglicht eine Kraftübertragung auch in Freilaufrichtung. Dies hat den Vorteil, dass in Fällen, in denen der Antrieb eine vergleichbare Leistungscharakteristik in Vorwärts- wie in Rückwärtsrichtung aufweisen soll, der Freilauf überbrückt werden kann. Damit können auch in beiden Richtungen alle vorhandenen Motoren gemeinsam betrieben werden und ein entsprechend hohes Abtriebsmoment an der Abtriebsachse zur Verfügung stellen.

Zur Lösung der gestellten Aufgabe schlägt die Erfindung auch ein Verfahren nach Anspruch 6 zur Beeinflussung der Leistung des Antriebes vor. Zur Beschleunigung eines Mehrmotorenantriebes in Vorwärtsrichtung wird dabei zunächst das Fördervolumen der Pumpe vergrößert, zur weiteren Erhöhung der Drehzahl wird das Volumen des hinter dem Freilauf angeordneten Motors reduziert und ggf. das Volumen der weiteren hinter dem Freilauf angeordneten Motoren reduziert.

Durch die Erhöhung des Fördervolumens der Pumpe nimmt der Druckmittelfluss durch die Motoren zu, was zu einer Beschleunigung des Antriebes führt. Soll die Drehzahl weiter erhöht werden, wird das Volumen eines ersten Motors reduziert, was bei gleichbleibendem Druckmittelfluss zu diesem Motor zu einer Erhöhung der Drehzahl bei abnehmendem Abtriebsmoment führt. Hängen mehrere mechanisch gekoppelte Motoren am selben Druckmittelkreis, teilt sich der Druckmittelstrom bei Verringerung des Volumens eines Motors neu auf, in dem ein größerer Teil des Druckmittels zu den Motoren mit gleichbleibendem Volumen fließt, was insgesamt zu einer Erhöhung der Drehzahl aller Motoren führt. Wird das Volumen eines Motors auf Null reduziert, fließt kein Druckmittel mehr durch ihn hindurch, er gibt kein Abtriebsmoment mehr ab und kann auch von den restlichen vor dem Freilauf angeordneten Motoren nicht über den Freilauf in Freilaufrichtung angetrieben werden, so dass er durch den Freilauf abgekoppelt stehen bleibt und der gesamte Druckmittelstrom durch die verbleibenden Motoren fließt.

Die maximale Drehzahl wird erreicht, wenn bei maximalem Fördervolumen der Pumpe das Volumen aller Motoren auf den Minimalwert reduziert ist und im Extremfall alle bis auf einen Motor stehen und der verbleibende durch die Freiläufe von den stehenden Motoren entkoppelte Motor durch den gesamten Druckmittelstrom bei seinem minimalen, von Null verschiedener Volumen mit Maximaldrehzahl läuft.

Eine weitere Verfahrensweise nach der Erfindung dient zur Verzögerung eines Mehrmotorenantriebes und ist dadurch gekennzeichnet, dass die Pumpe als Motor arbeitet, alle vor dem Freilauf angeordneten Motoren mit einem Verdrängungsvolumen größer als Null als Pumpe arbeiten und das Volumen der weiteren hinter dem Freilauf angeordneten Motoren auf Null gestellt wird.

Mit diesem Verfahren ist es möglich, eine besonders energiesparende Verzögerung des Antriebes zu erreichen. Dabei kann die bei Motorbetrieb der Pumpe an deren Antriebswelle abgegebene Leistung zum Antrieb weiterer mechanischer Komponenten benutzt werden und muss nicht in Verlustwärme umgesetzt werden. Um dies zu erreichen, wird das gewünschte Verzögerungsverhalten des Antriebs durch entsprechende steuerungstechnische Maßnahmen an den verstellbaren Pumpen und Motoren erreicht. Ein solcher Zustand tritt auf, wenn der über dem/den Motor/en anliegende Differenzdruck sein Vorzeichen umkehrt und die kinetische Energie der Last an den Hydraulikkreis abgegeben wird. Durch Anpassung des Fördervolumens der Pumpe und bei Verwendung eines durch Verstellung des Verdrängungsvolumens steuerbaren Motors vor dem Freilauf kann die Verzögerung des Antriebs (der Last) und die Menge der an andere pumpenseitig gekoppelte Verbraucher abgegebenen Energie reguliert werden.

Ein erfindungsgemäßes Verfahren zum Beschleunigen des Mehrmotorenantriebes in Rückwärtsrichtung besteht darin, dass die Förderrichtung der Pumpe umgekehrt wird, das Fördervolumen der Pumpe vergrößert und zur weiteren Erhöhung der Drehzahl bei Verwendung eines verstellbaren Motors vor dem Freilauf dessen Verdrängungsvolumen reduziert wird. Diese Verfahrensweise dient dem einfachen Betrieb des Mehrmotorenantriebes in Rückwärtsrichtung. Durch Null verstellbare Pumpen lassen eine Umkehr der Förderrichtung des Druckmittelflusses im Kreislauf zu. Hierdurch bewegen sich die Motoren ebenfalls in umgekehrter Richtung. Durch Erhöhen des Fördervolumens der Pumpe und Reduktion des Verdrängungsvolumens des verstellbaren Motors läßt sich, wie weiter oben schon ausgeführt, die Drehzahl des Antriebs und damit der angetriebenen Last erhöhen.

Die Erfindung betrifft außerdem ein Verfahren zum Beschleunigen des Mehrmotorenantriebes in Rückwärtsrichtung, das dadurch gekennzeichnet ist, dass die schaltbare Kupplung geschlossen wird, um den Freilauf in Freilaufrichtung zu überbrücken und die Förderrichtung der Pumpe umgekehrt wird, das Fördervolumen der Pumpe vergrößert wird, zur weiteren Erhöhung der Drehzahl das Volumen eines ersten Motors reduziert und ggf. das Volumen der weiteren Motoren reduziert wird.

Damit ein solcher Mehrmotorenantrieb im Langsambetrieb die gleichen Antriebscharakteristiken in Vorwärts- wie in Rückwärtsrichtung besitzt, kann, wie oben beschrieben, eine Kupplung parallel zum Freilauf eingesetzt werden. Die Kupplung wird für den Betrieb in Rückwärtsrichtung dann geschlossen und anschließend die Förderrichtung der Pumpe umgekehrt, wodurch alle Motoren mit einem Volumen größer als Null durch den umgekehrten Ölstrom in Rückwärtsrichtung angetrieben werden. Durch Erhöhung des Fördervolumens der Pumpe kann die Drehzahl des Antriebes erhöht werden, da sich der Ölstrom automatisch auf die Antriebe aufteilt. Zur weiteren Erhöhung der Drehzahl wird dann analog zum Verfahren in Vorwärtsrichtung das Volumen der Motoren nacheinander reduziert, bis eine Maximaldrehzahl der Gesamtanordnung erreicht ist.

Weitere Merkmale, Einzelheiten und Vorteile der Erfindung ergeben sich aufgrund der nachfolgenden Beschreibung sowie anhand der Zeichnungen. Diese zeigen in:
- Fig. 1: eine schematische Übersicht eines erfindungsgemäßen Mehrmotorenantriebes mit einem regelbaren Motor,
- Fig. 2: einen Querschnitt durch einen beispielhaft dargestellten Freilauf für die Lösung der Mehrmotorenanordnung nach der Erfindung,
- Fig. 3: eine schematische Übersicht über den Mehrmotorenantrieb mit zwei regelbaren Motoren,
- Fig. 4: eine Darstellung des Antriebes mit einer schaltbaren Kupplung,
- Fig. 5: eine Darstellung des hydraulischen Schaltplanes für einen Mehrmotorenantrieb nach der Erfindung sowie in
- Fig. 6: eine Darstellung der Fahrkennlinie des Mehrmotorenantriebes.

Ein allgemein mit 1 bezeichneter erfindungsgemäßer Mehrmotorenantrieb weist einen im Motorvolumen verstellbaren hydraulischen Motor 2 und einen hydraulischen Motor mit konstantem Verdrängungsvolumen 3 auf Diese sind über einen mechanischen Freilauf 4 miteinander verbunden. Eine verstellbare hydraulische Pumpe 5 versorgt den hydraulischen Kreislauf über Leitungen 6 und 7 mit Druckmittel.

Mindestens ein Drucksensor mit Messsignalumformer 8 misst den Druck im Hydraulikkreislauf und gibt ihn in Form eines elektrischen Signales an eine Steuereinheit 9 weiter. Diese berechnet aus den gemessenen Zustandsgrößen im Kreis und den vom Bediener vorgegebenen Soll- Größen die Stell- Signale und steuert damit über die Motorsteuerung 9b das Motorvolumen des verstellbaren Motors 2 sowie mit der Pumpensteuerung 9a das Verdrängungsvolumen der verstellbaren Pumpe 5.

Abhängig vom Volumenstrom der Pumpe 5 und dem Motorvolumen des verstellbaren Motors 2 stellt sich damit eine Drehzahl der Motoren ein. Abhängig von der Einstellung des verstellbaren Motors 2 teilt sich der Volumenstrom der Pumpe 5 dabei auf die beiden Motoren 2 und 3 auf, wobei wegen der Parallelschaltung der Motoren über beide Motoren die gleiche Druckdifferenz anliegt und der Freilauf solange blockiert und dabei die Drehmomente beider Motoren auf die Abtriebsachse übertragen werden, bis das vom verstellbaren Motor abgegebene Drehmoment gleich Null ist und dieser dann stehen bleibt. So treiben die beiden Motoren 2 und 3 gemeinsam eine Last 10 an, z.B. ein Fahrwerk eines Fahrzeuges.

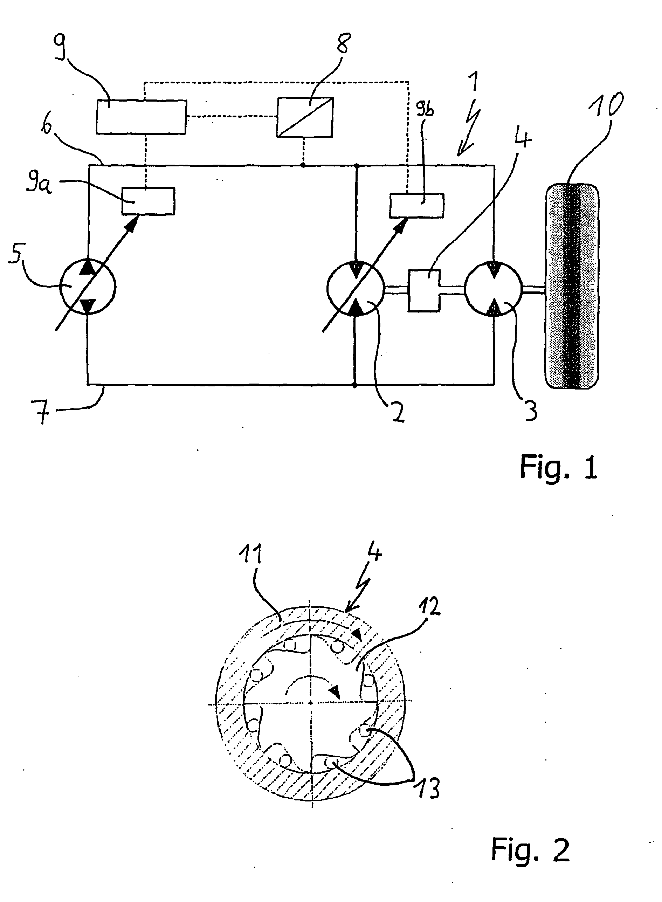

Der Freilauf 4 besteht, wie in Fig. 2 beispielhaft dargestellt, aus einem äußeren Ring 11, der kraftschlüssig mit dem lastseitigen Motor verbunden ist. Im Inneren des Ringes 11 befindet sich ein Sternrad 12, das mit dem verstellbaren Motor 2 verbunden ist. Wird das Sternrad 12 angetrieben, verklemmen sich auf den äußeren Kulissenflächen abrollende Metallkugeln 13 mit der inneren Oberfläche des Ringes 11 und bewirken so eine Kraftübertragung vom Stemrad 12 auf den äußeren Ring 11. Bewegt sich der äußere Ring 11 schneller als das Sternrad 12, fallen die Kugeln in Ausnehmungen des Rades 12 und es findet keine Übertragung der Bewegung vom äußeren Ring 11 auf das Sternrad 12 statt, so dass sich der Ring 11 in diese Richtung frei drehen kann.

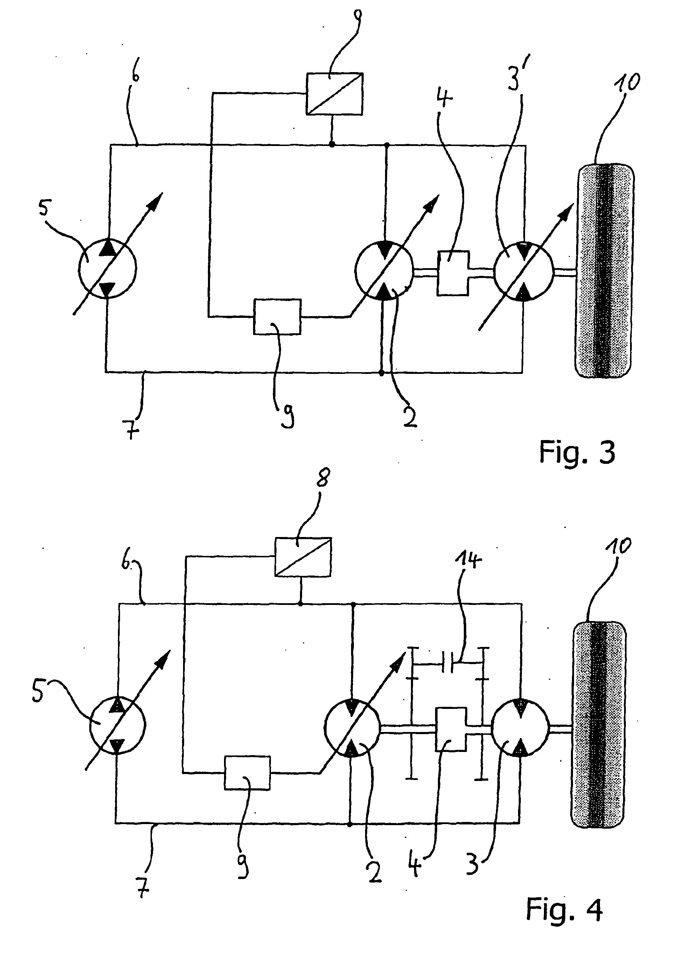

Eine alternative Möglichkeit, bei der beide Motoren verstellbar sind, ist in Fig. 3 dargestellt. Hierbei ist neben dem ersten verstellbaren Motor 2 auch der lastseitige Motor 3' verstellbar und kann von der Regelung 9, abhängig von dem aktuellen Zustand des Antriebes und den gewünschten Soll- Größen, verstellt werden. Dadurch ist es möglich, den Betriebsbereich des Antriebes weiter zu vergrößern.

Bei Rückwärtsfahrt ist durch den Freilauf 4 keine Kraftübertragung vom Motor 2 auf die Last 10 möglich. Für den Fall, dass im Rückwärtsbetrieb dasselbe maximale Moment an der Last zur Verfügung stehen soll wie beim Vorwärtsbetrieb, ist eine steuerbare Kupplung 14 parallel zum Freilauf vorgesehen, wie in Fig. 4 dargestellt. Diese wird im Rückwärtsbetrieb geschlossen und ermöglicht so eine Kraftübertragung vom Motor 2 über den Motor 3 an die Last 10 auch in Freilaufrichtung des Freilaufes 4.

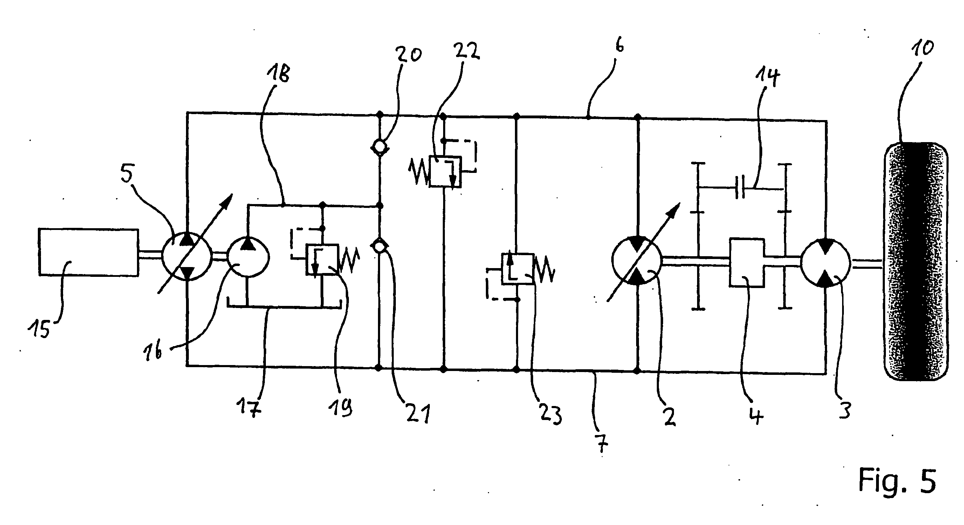

Der Aufbau des hydraulischen Kreises ist in Fig. 5 näher dargestellt. Ein Verbrennungsmotor 15 treibt die verstellbare Pumpe 5 an und gleichzeitig eine Konstantpumpe 16; die den Niederdruckkreis 18 vorspannt, der im wesentlichen aus einem Druckmittelvorratsbehälter 17 und einem Druckventil 19 besteht.

Der Niederdruckkreis 18 ist über zwei Rückschlagventile 20 und 21 mit dem Hochdruckkreis verbunden. Dieser wird durch zwei Überdruckventile 22 und 23 vor Zerstörung durch Überdrücke im Kreis geschützt. Daran schließt sich über die Druckmittelleitungen 6 und 7 der Antriebsteil mit den beiden hydraulischen Motoren 2 und 3 an, die mit einem durch die entsperrbare Kupplung 14 überbrückbaren Freilauf 4 miteinander verbunden sind.

Die an die Last 10 abgegebene Leistung wird durch die verstellbare Pumpe 5 bestimmt, die von dem Verbrennungsmotor 15 mit einer bestimmten Drehzahl angetrieben wird. Der abgegebene Druckmittelvolumenstrom bestimmt sich durch die Einstellung des Verdrängungsvolumens der Pumpe 5. In welchem Verhältnis von Drehzahl und Moment diese Leistung an die Last 10 abgegeben wird, bestimmt sich durch die Einstellung des Motorvolumens des verstellbaren Motors 2.

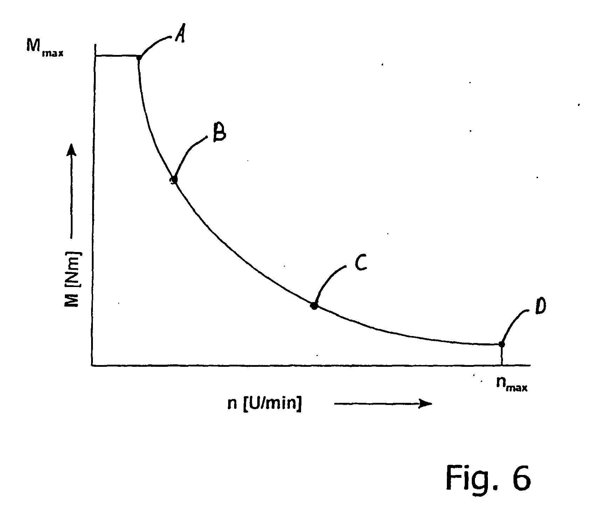

Die sich dadurch ergebende Fahrkennlinie des Antriebes 1 im Vorwärtsbetrieb ist in Fig. 6 prinzipiell dargestellt. Diese zeigt ein Diagramm, bei der das Lastmoment über der Drehzahl aufgetragen ist. Zum Anlauf des Motors im Punkt A wird das Verdrängungsvolumen erhöht, wobei das Motorvolumen des verstellbaren Motors maximal ist. Durch die Erhöhung des Pumpenvolumenstromes nimmt die Drehzahl des Motors zu bis zum maximalen oder einen vorher gewählten Einstellwert des Pumpenverdrängungsvolumens im Punkt B. Zur weiteren Erhöhung der Drehzahl wird nun das Motorvolumen des verstellbaren Motors reduziert, was zu einer Verringerung des an die Last abgegebenen Momentes führt. Die Abnahme des Motorvolumens bewirkt, dass der zur Verfügung gestellte Volumenstrom durch das in Summe für beide Motoren kleiner werdende Motorvolumen fließen muss, wodurch die Drehzahlerhöhung bewirkt wird. Im Punkt C ist das Volumen des verstellbaren Motors 2 auf Null reduziert, so dass der gesamte zur Verfügung stehende Volumenstrom nur noch durch den Motor 3 fließt. Hier ist im Falle, dass nur der Motor 2 verstellbar ist und die Pumpe bereits auf maximales Verdrängungsvolumen gestellt ist, die maximale Drehzahl erreicht. Ist auch der Motor 3' verstellbar, kann dessen Motorvolumen ebenfalls reduziert werden, was eine weitere Drehzahlerhöhung bewirkt. Die maximale Drehzahl ist dann in Punkt D erreicht, bei dem der maximale Pumpenvolumenstrom durch das minimale Motorvolumen des verstellbaren Motors 3' fließt und der Motor 2 durch sein auf Null reduziertes Volumen steht, wobei er durch den Freilauf 4 von der Last abgekoppelt ist. Natürlich ist die Erfindung nicht auf die vorstehenden Beispiele beschränkt, sondern kann auch in vielfältiger Weise abgeändert werden, ohne den Grundgedanken zu verlassen. Insbesondere ist die Anzahl der Motoren nicht auf zwei beschränkt, sondern kann durchaus mehr betragen, wodurch sich die Flexibilität des Antriebs weiter erhöht, da sich ein deutlich größerer Drehzahlbereich bzw. größere Motormomente erzielen lassen. Auch die Kombination von verstellbaren und nicht verstellbaren Motoren ist nicht auf das obige Beispiel beschränkt. Außerdem läßt sich ein solcher Antrieb auch in globale Hydraulikkreise einbinden, bei denen vielfältige in einem so angetriebenen Nutzfahrzeug vorhandene hydraulisch bewegte Lasten mit einem umfassenden Steuerungskonzept bedient werden.

### Liste der Bezugszeichen

- 1: Mehrmotorenantrieb
- 2: verstellbarer hydraulischer Motor
- 3: hydraulischer Motor mit konstantem Verdrängungsvolumen
- 3': lastseitiger Motor
- 4: mechanischer Freilauf
- 5: hydraulische Pumpe
- 6: Leitung
- 7: Leitung
- 8: Messsignalumformer
- 9: Steuereinheit
- 9a: Pumpensteuerung
- 9b: Motorsteuerung
- 10: Last
- 11: äußerer Ring
- 12: Sternrad
- 13: abrollende Metallkugeln
- 14: steuerbare Kupplung
- 15: Verbrennungsmotor
- 16: Konstantpumpe
- 17: Druckmittelvorratsbehälter
- 18: Niederdruckkreis
- 19: Druckventil
- 20: Rückschlagventil
- 21: Rückschlagventil
- 22: Überdruckventil
- 23: Überdruckventil

## Patentansprüche

1. Hydrostatischer Mehrmotorenantrieb mit wenigstens zwei getriebelosen, hydraulischen, eine gemeinsame Last beaufschlagenden Motoren (2,3), die in einem geschlossenen hydraulischen Kreislauf (6,7) angeordnet sind, in welchem zur Druckmittelversorgung der beiden Motoren (2,3) wenigstens eine verstellbare Pumpe (5) vorgesehen ist, **dadurch gekennzeichnet daß** die Motoren (2, 3) direkt durch wenigstens einen Freilauf (4) miteinander verbunden sind und der hinter dem Freilauf (4) angeordnete Motor (2) ein verstellbares Verdrängungsvolumen aufweist, wobei zur Erhöhung der Drehzahl das Volumen des hinter dem Freilauf (4) angeordneten Motors (2) reduzierbar und der Freilauf (4) derartig angeordnet ist, dass, sobald das Volumen des hinter dem Freilauf (4) angeordneten Motors (2) auf Null reduziert ist, dieser Motor (2) von den verbliebenen Motoren (3) abgekoppelt wird.

2. Hydrostatischer Mehrmotorenantrieb nach Anspruch 1,
**dadurch gekennzeichnet,**
**dass** wenigstens ein Drucksensor in der/den Leitung(en) zwischen den Motoren (2,3) und der Pumpe (5) zur Unterscheidung des Betriebszustandes Beschleunigen oder Verzögern vorgesehen ist.

3. Hydrostatischer Mehrmotorenantrieb nach Anspruch 1 oder 2,
**dadurch gekennzeichnet,**
**dass** die Motoren (2,3) parallel zum Freilauf (4) durch eine steuerbare Kupplung (14) verbunden sind.

4. Hydrostatischer Mehrmotorenantrieb nach Anspruch 3,
**dadurch gekennzeichnet,**
**dass** die Motoren (2,3) mit dem Freilauf (4) und der steuerbaren Kupplung (14) in einem Gehäuse angeordnet sind.

5. Hydrostatischer Mehrmotorenantrieb nach einem der vorangehenden Ansprüche,
**dadurch gekennzeichnet,**
**dass** eine elektronische Steuereinheit (Mikroprozessor) zur Ansteuerung der verstellbaren hydrostatischen Pumpe und/oder Motoren (2,3) vorgesehen ist.

6. Verfahren zur Beeinflussung der Leistung und des Antriebes nach Anspruch 3,
**dadurch gekennzeichnet,**
**dass** das Fördervolumen der Pumpe (5) verändert und/oder das Volumen eines Motors (2) verringert oder vergrößert und das Volumen weiterer Motoren (3') verringert oder vergrößert und für Rückwärtsfahrt die steuerbare Kupplung (14) gesperrt wird.

7. Verfahren nach Anspruch 6 zur Beschleunigung eines Mehrmotorenantriebes In Vorwärtsrichtung,
**dadurch gekennzeichnet,**
**dass** zunächst das Fördervolumen der Pumpe (5) vergrößert wird, zur weiteren Erhöhung der Drehzahl das Volumen des ersten Motors (2) reduziert wird und ggf. das Volumen des weiteren Motors (3') reduziert wird.

8. Verfahren nach Anspruch 6 zur Verzögerung eines Mehrmotorenantriebes,
**dadurch gekennzeichnet,**
**dass** durch den/die Drucksensoren in der Leitung der Druckwechsel Im System erkannt und das Verdrängungsvolumen des/der hinter dem Freilauf (4) angeordneten Motors (2) auf Null gestellt wird und das Verzögerungsverhalten des Antriebes durch Einstellung des Verdrängungsvolumens der Pumpe (5) beeinflusst wird.

9. Verfahren nach Anspruch 6 zum Beschleunigen eines Mehrmotorenantriebes in Rückwärtsrichtung,
**dadurch gekennzeichnet,**
**dass** die Förderrichtung der Pumpe (5) umgekehrt wird, das Fördervolumen der Pumpe (5) vergrößert wird und zur weiteren Erhöhung der Drehzahl das Volumen des Motors (2) reduziert wird.

10. Verfahren zum Beschleunigen eines Mehrmotorenantriebes nach Anspruch 6 in Rückwärtsrichtung,
**dadurch gekennzeichnet,**
**dass** die Kupplung (14) gesperrt und die Förderrichtung der Pumpe (5) umgekehrt wird, das Fördervolumen der Pumpe (5) vergrößert wird, zur weiteren Erhöhung der Drehzahl das Volumen des ersten Motors (2) reduziert wird und ggf. das Volumen der weiteren Motoren (3') reduziert wird.

## Claims

1. Hydrostatic multi-motor drive with at least two gear-less, hydraulic motors (2,3) impacting a common load and arranged in a closed hydraulic circuit (6,7) in which at least one adjustable pump (5) is provided to supply pressure means to the two motors (2,3),
**characterized in that**
the motors (2,3) are connected to each other directly by at least one free-wheel (4), wherein the motor (2) arranged behind the free-wheel (4) has an adjustable displacement volume, wherein the volume of the motor (2) arranged behind the free-wheel (4) is reducible to further increase the speed and the free-wheel (4) is arranged such that, as soon as the volume of the motor (2) arranged behind the free-wheel (4) is reduced to zero, this motor (2) is disconnected from the remaining motors (3).

2. Hydrostatic multi-motor drive according to claim 1,
**characterized in that**
at least one pressure sensor is provided in the line(s) between the motors (2,3) and the pump (5) to distinguish between the operating states of acceleration or deceleration.

3. Hydrostatic multi-motor drive according to claim 1 or 2,
**characterized in that**
the motors (2,3) are connected parallel to the free-wheel (4) by a controllable coupling (14).

4. Hydrostatic multi-motor drive according to claim 3,
**characterized in that**
the motors (2,3) are arranged with the free-wheel (4) and the controllable coupling (14) in a casing.

5. Hydrostatic multi-motor drive according to one of the previous claims,
**characterized in that**
an electronic control unit (microprozessor) is provided to drive the adjustable hydrostatic pump and/or the motors (2,3).

6. Method of influencing the power of the drive according to claim 3,
**characterized in that**
the displacement volume of the pump (5) is changed and/or the volume of a motor (2) is reduced or increased and the volume of further motors (3') is reduced or increased and the controllable coupling (14) is locked for reverse travel.

7. Method according to claim 6 for accelerating a multi-motor drive in forward direction,
**characterized in that**
firstly the displacement volume of the pump (5) is increased, the volume of the first motor (2) is reduced to further increase the speed and optionally the volume of the further motor (3') is reduced.

8. Method according to claim 6 for decelerating a multi-motor drive,
**characterized in that**
the pressure change in the system is recognized by the pressure sensor(s) in the line and the displacement volume of the motor (2) arranged behind the free-wheel (4) is set to zero and the deceleration behaviour of the drive is influenced by setting the displacement volume of the pump (5).

9. Method according to claim 6 for accelerating a multi-motor drive in backward direction,
**characterized in that**
the direction of delivery of the pump (5) is reversed, the displacement volume of the pump (5) is increased and the volume of the motor (2) is reduced to further increase the speed.

10. Method for accelerating a multi-motor drive according to claim 6 in backward direction,
**characterized in that**
the coupling (14) is locked and the direction of delivery of the pump (5) is reversed, the displacement volume of the pump (5) is increased, the volume of the first motor (2) is reduced, and optionally the volume of the further motors (3') is reduced, to further increase the speed.

## Revendications

1. Système d'entraînement multimoteur hydrostatique avec au moins deux moteurs (2,3) sans engrenages, hydrauliques, alimentant une charge commune, qui sont placés dans un circuit hydraulique fermé (6,7), dans lequel pour alimenter les deux moteurs (2,3) en moyen de pression, au moins une pompe réglable (5) est prévue, **caractérisé en ce que** les moteurs (2,3) étant reliés directement l'un à l'autre au moins par une roue libre (4), le moteur (2) placé derrière la roue libre (4) présentant un volume de refoulement réglable, le volume du moteur (2) placé derrière la roue libre (4) est réductible pour augmenter encore la vitesse, la roue libre (4) étant placée tellement que, aussitôt que le volume du moteur (2) placé derrière la roue libre (4) est réglé à zéro, ce moteur (2) est decroché de moteurs restants (3).

2. Système d'entraînement multimoteur hydrostatique selon la revendication 1,
**caractérisé en ce qu'**au moins un capteur de pression est prévu dans la/les conduite(s) entre les moteurs (2,3) et la pompe (5) pour différencier l'état de service accélération ou décélération.

3. Système d'entraînement multimoteur hydrostatique selon la revendication 1 ou 2,
**caractérisé en ce que** les moteurs (2,3) sont reliés parallèlement à la roue libre (4) par un embrayage commandable (14).

4. Système d'entraînement multimoteur hydrostatique selon la revendication 3,
**caractérisé en ce que** les moteurs (2,3) sont placés dans un boîtier avec la roue libre (4) et l'embrayage commandable (14).

5. Système d'entraînement multimoteur hydrostatique selon l'une des revendications précédentes,
**caractérisé en ce qu'**une unité de commande électronique (microprocesseur) est prévue pour commander la pompe hydrostatique réglable et/ou les moteurs (2,3).

6. Procédé pour influer sur la performance de l'entraînement selon la revendication 3,
**caractérisé en ce que** le volume de pompage de la pompe (5) est modifié et/ou le volume d'un moteur (2) est réduit ou augmenté, et le volume d'autre moteurs (3') est réduit ou augmenté, et pour la marche arrière, l'embrayage commandable (14) est fermé.

7. Procédé selon la revendication 6 pour l'accélération d'un système d'entraînement multimoteur en marche avant,
**caractérisé en ce que** le volume de pompage de la pompe (5) est d'abord augmenté, le volume du premier moteur (2) est réduit pour augmenter encore la vitesse et le cas échéant le volume de l'autre moteur (3') est réduit.

8. Procédé selon la revendication 6 pour la décélération d'un système d'entraînement multimoteur,
**caractérisé en ce que** grâce au/aux capteur(s) de pression dans la conduite, l'échange de pression dans le système est reconnu et le volume de refoulement du/des moteur(s) (2) placé(s) derrière la roue libre (4) est réglé à zéro et le comportement de décélération de l'entraînement est influencé par le réglage du volume de refoulement de la pompe (5).

9. Procédé selon la revendication 6 pour l'accélération d'un système d'entraînement multimoteur en marche arrière,
**caractérisé en ce que** le sens de pompage de la pompe (5) est inversé, le volume de pompage de la pompe (5) est augmenté et pour augmenter encore la vitesse, le volume du moteur (2) est réduit.

10. Procédé pour l'accélération d'un système d'entraînement multimoteur selon la revendication 6 en marche arrière,
**caractérisé en ce que** l'embrayage (14) est fermé et le sens de pompage de la pompe (5) est inversé, le volume de pompage de la pompe (5) est augmenté, pour augmenter encore la vitesse, le volume du premier moteur (2) est réduit, et le cas échéant le volume de l'autre moteur (3') est réduit.
